# EUROPEAN PATENT APPLICATION

(11) **EP 4 644 873 A1**
(43) Date of publication of application: **05.11.2025**
(21) Application number: 23911902.7
(22) Date of filing: 20.12.2023
(51) Int. Cl.: G01N 21/65, G01N 21/17, G01N 21/27, G01N 21/64

(54) **SPECTROSCOPIC ANALYSIS DEVICE AND SPECTROSCOPIC ANALYSIS METHOD**

(30) Priority: 28.12.2022 JP 2022212366
(71) Applicant: HORIBA, Ltd., Minami-ku Kyoto-shi Kyoto 601-8510 (JP)
(72) Inventor: WAKABAYASHI, Satoru, Kyoto-shi, Kyoto 601-8510 (JP); UCHIGASHIMA, Mikiko, Kyoto-shi, Kyoto 601-8510 (JP); NAKA, Nobuyuki, Kyoto-shi, Kyoto 601-8510 (JP)
(74) Representative: Isarpatent
(86) International application number: PCT/JP2023/045761
(87) International publication number: WO 2024/143122

(57) **Abstract**

Provided are a spectroscopic analysis device and a spectroscopic analysis method capable of analyzing components in a liquid sample over a wide concentration range.

A spectroscopic analysis device includes a first analysis unit that performs fluorescence spectroscopic analysis and/or absorption spectroscopic analysis on a first component contained in a liquid sample using a secondary light generated from the liquid sample irradiated with a primary light; a second analysis unit that performs Raman spectroscopic analysis on a second component contained in the liquid sample using a secondary light generated from the liquid sample irradiated with a primary light; a concentration measurement unit that measures concentrations of the first component and the second component contained in the liquid sample; and a control unit. The control unit causes the first analysis unit or the second analysis unit to execute analysis depending on the concentrations measured by the concentration measurement unit.

## Description

### Technical Field

The present invention relates to a spectroscopic analysis device and a spectroscopic analysis method that irradiate a substance with a primary light and that analyzes a secondary light generated from the substance.

### Background Art

A medical or biological sample may be analyzed, such as when components contained in a culture medium for culturing cells are analyzed in pharmaceutical development. In order to analyze a medical or biological sample, an analysis technique capable of detecting and quantifying organic compounds in an aqueous solution may be used. An example of such an analysis technique is Raman spectroscopy. In addition, analysis techniques with a lower detection limit than Raman spectroscopy include absorption spectroscopy and fluorescence spectroscopy. Patent Literature 1 discloses an analysis device that performs Raman spectroscopy and fluorescence spectroscopy.

### Citation List

### Patent Literature:

Patent Literature 1: Japanese Patent No. 2882836

### Summary

### Technical Problems

The concentration of a component that can be detected by Raman spectroscopy is on the order of g/L. When the concentration of a component is low, Raman spectroscopy may not be able to detect the component with high accuracy. Absorption spectroscopy and fluorescence spectroscopy have lower detection limits than Raman spectroscopy, but are not suitable for analyzing high concentrations of liquid samples.

The present invention has been made in view of such circumstances, and an object of the present invention is to provide a spectroscopic analysis device and a spectroscopic analysis method capable of analyzing components in a liquid sample over a wide concentration range.

### Solution to Problems

A spectroscopic analysis device according to one aspect of the present invention is characterized by comprising: a first analysis unit that performs fluorescence spectroscopic analysis and/or absorption spectroscopic analysis on a first component contained in a liquid sample using a secondary light generated from the liquid sample irradiated with a primary light; a second analysis unit that performs Raman spectroscopic analysis on a second component contained in the liquid sample using a secondary light generated from the liquid sample irradiated with a primary light; a concentration measurement unit that measures concentrations of the first component and the second component contained in the liquid sample; and a control unit, wherein the control unit causes the first analysis unit or the second analysis unit to execute analysis depending on the concentrations measured by the concentration measurement unit.

In an aspect of the present invention, the spectroscopic analysis device measures the concentrations of the first component and the second component contained in the liquid sample, and causes the first analysis unit that performs fluorescence spectroscopic analysis and/or absorption spectroscopic analysis or the second analysis unit that performs Raman spectroscopic analysis to execute the analysis depending on the measured concentrations. In fluorescence spectroscopic analysis and absorption spectroscopic analysis, when the concentration of the first component is low, the analysis of the first component can be performed with high accuracy. In Raman spectroscopic analysis, when the concentration of the second component is high, the analysis of the second component can be performed with high accuracy. A high-accuracy analysis can be performed by using an analysis technique depending on the concentration of the component to be analyzed.

In the spectroscopic analysis device according to one aspect of the present invention, it is characterized in that the first component and the second component are different from each other, and the concentration of the first component is lower than the concentration of the second component.

In an aspect of the present invention, among components contained in the liquid sample, the first component that is analyzed by the first analysis unit and the second component that is analyzed by the second analysis unit are different from each other. In addition, the concentration of the first component is lower than the concentration of the second component. The first component contained in a trace amount in the liquid sample can be analyzed with high accuracy by fluorescence spectroscopic analysis or absorption spectroscopic analysis. In addition, the second component contained at a high concentration in the liquid sample can be analyzed with high accuracy by Raman spectroscopic analysis.

In the spectroscopic analysis device according to one aspect of the present invention, it is characterized in that the first component and the second component are the same.

In an aspect of the present invention, the first component and the second component are the same component. By performing fluorescence spectroscopic analysis or absorption spectroscopic analysis when the concentration is low, and performing Raman spectroscopic analysis when the concentration is high, the spectroscopic analysis device is enabled to analyze a specific component contained in the liquid sample over a wide concentration range. When the concentration of the specific component changes over time, a change in the concentration of the specific component over time can be acquired.

In the spectroscopic analysis device according to one aspect of the present invention, it is characterized in that the control unit causes the first analysis unit to execute analysis when the concentration of the first component is less than a predetermined first threshold value, and causes the second analysis unit to execute analysis when the concentration of the second component is greater than a predetermined second threshold value.

In an aspect of the present invention, the spectroscopic analysis device performs fluorescence spectroscopic analysis or absorption spectroscopic analysis on the liquid sample when the concentration of the first component contained in the liquid sample is low, and performs Raman spectroscopic analysis on the liquid sample when the concentration of the second component contained in the liquid sample is high. By analyzing the liquid sample using an appropriate analysis technique depending on the concentration, both a component with a high concentration and a component with a low concentration can be analyzed with high accuracy.

In the spectroscopic analysis device according to one aspect of the present invention, it is characterized in that the control unit causes the first analysis unit to idle when the concentration of the first component is in a first range that is greater than the first threshold value and that is in the vicinity of the first threshold value, and causes the second analysis unit to idle when the concentration of the second component is in a second range that is less than the second threshold value and that is in the vicinity of the second threshold value.

In an aspect of the present invention, the spectroscopic analysis device causes the first analysis unit to idle when the concentration of the first component is close to an appropriate value for fluorescence spectroscopic analysis or absorption spectroscopic analysis. When the concentration of the first component becomes an appropriate value for fluorescence spectroscopic analysis or absorption spectroscopic analysis, fluorescence spectroscopic analysis or absorption spectroscopic analysis can be executed at an appropriate timing by immediately executing the analysis using the first analysis unit. In addition, the spectroscopic analysis device causes the second analysis unit to idle when the concentration of the second component is close to an appropriate value for Raman spectroscopic analysis. When the concentration of the second component becomes an appropriate value for Raman spectroscopic analysis, Raman spectroscopic analysis can be executed at an appropriate timing by immediately executing the analysis using the second analysis unit.

In the spectroscopic analysis device according to one aspect of the present invention, it is characterized in that the control unit causes the first analysis unit to execute calibration when the concentration of the first component is less than the first threshold value, and causes the second analysis unit to execute calibration when the concentration of the second component is greater than the second threshold value.

In an aspect of the present invention, the spectroscopic analysis device performs calibration of the first analysis unit when the concentration of the first component contained in the liquid sample is low, and performs calibration of the second analysis unit when the concentration of the second component contained in the liquid sample is high. The calibration of the first analysis unit can be performed in an appropriate state for performing fluorescence spectroscopic analysis or absorption spectroscopic analysis, and the calibration of the first analysis unit can be appropriately performed. In addition, the calibration of the second analysis unit can be performed in an appropriate state for performing Raman spectroscopic analysis, and the calibration of the second analysis unit can be appropriately performed.

In the spectroscopic analysis device according to one aspect of the present invention, it is characterized in that the first threshold value and the second threshold value are the same threshold value.

In an aspect of the present invention, the first threshold value and the second threshold value are the same. One of the analysis techniques is selectively executed depending on the concentration of the component contained in the liquid sample.

A spectroscopic analysis method according to one aspect of the present invention is characterized by comprising: measuring concentrations of a first component and a second component contained in a liquid sample; performing fluorescence spectroscopic analysis and/or absorption spectroscopic analysis using a secondary light generated from the liquid sample irradiated with a primary light, when the concentration of the first component is low; and performing Raman spectroscopic analysis using a secondary light generated from the liquid sample irradiated with a primary light, when the concentration of the second component is high.

In an aspect of the present invention, concentrations of a first component and a second component contained in a liquid sample are measured, fluorescence spectroscopic analysis and/or absorption spectroscopic analysis is performed on the first component when the concentration of the first component is low, and Raman spectroscopic analysis is performed on the second component when the concentration of the second component is high. The liquid sample can be analyzed using an appropriate analysis technique depending on the concentration of the component to be analyzed.

### Advantageous Effects of Invention

The present invention has excellent effects such as being able to analyze the components contained in the liquid sample over a wide concentration range.

### Brief Description of Drawings

FIG. 1 is a block diagram illustrating a configuration example of a spectroscopic analysis device according to Embodiment 1.
FIG. 2 is a block diagram illustrating an example of an internal functional configuration of a control unit.
FIG. 3 is a flowchart illustrating an example of the procedure of a process for analyzing a first component that is executed by the spectroscopic analysis device according to Embodiment 1.
FIG. 4 is a flowchart illustrating an example of the procedure of a process for analyzing a second component that is executed by the spectroscopic analysis device according to Embodiment 1.
FIG. 5 is a flowchart illustrating an example of a procedure of an analysis process executed by a spectroscopic analysis device according to Embodiment 2.
FIG. 6 is a flowchart illustrating an example of a procedure of a calibration process executed by the spectroscopic analysis device.

### Description of Embodiments

Hereinafter, the present invention will be specifically described with reference to the drawings illustrating embodiments thereof.

### <Embodiment 1>

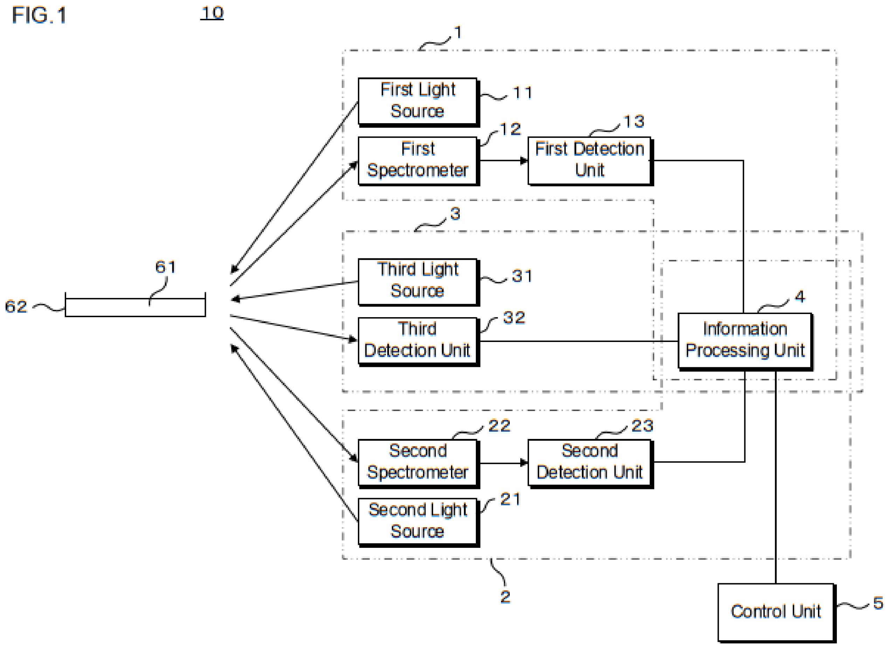

FIG. 1 is a block diagram illustrating a configuration example of a spectroscopic analysis device 10 according to Embodiment 1. The spectroscopic analysis device 10 executes a spectroscopic analysis method. The spectroscopic analysis device 10 performs spectroscopic analysis of a reactant stored in a liquid sample holding unit (not illustrated) capable of storing a liquid therein. The reactant is a liquid, for example, a liquid medium. A liquid sample 61 that is a part of the reactant is stored in an optical cell 62. The optical cell 62 is a transparent container. The liquid sample 61 is removed from the liquid sample holding unit, is injected into the optical cell 62, and is accommodated in the optical cell 62.

The spectroscopic analysis device 10 includes a first analysis unit 1 that performs fluorescence spectroscopic analysis on a specific first component contained in the liquid sample 61; a second analysis unit 2 that performs Raman spectroscopic analysis on a specific second component contained in the liquid sample 61; and a concentration measurement unit 3 that measures the concentrations (indices) of the first component and the second component in the liquid sample 61. The analysis by the first analysis unit 1 or the second analysis unit 2 includes measuring a specific component (the first component or the second component) contained in the liquid sample 61 using the first analysis unit 1 or the second analysis unit 2. The specific component is a substance contained in the liquid sample 61. In Embodiment 1, the first component and the second component are components that are different from each other. In FIG. 1, light is indicated by arrows.

The first analysis unit 1 includes a first light source 11, a first spectrometer 12, a first detection unit 13, and an information processing unit 4. The first light source 11 generates a primary light, and the liquid sample 61 in the optical cell 62 is irradiated with the primary light. A secondary light is generated from the liquid sample 61 in response to the irradiation of the liquid sample 61 with the primary light. The secondary light includes fluorescence. The secondary light is incident on the first spectrometer 12. The first spectrometer 12 spectrally separates the incident secondary light, and emits the spectrally separated secondary light. The spectrally separated secondary light is incident on the first detection unit 13. The first detection unit 13 includes a photodetector, and detects incident light. The first detection unit 13 includes, for example, a photodiode, an image sensor, or a photomultiplier tube as the photodetector. The first detection unit 13 may include an amplifier.

The information processing unit 4 is composed of a computer including a computing unit that performs computations and a memory that stores data. The first detection unit 13 is connected to the information processing unit 4. The first detection unit 13 inputs the intensity of the detected light to the information processing unit 4. The information processing unit 4 performs information processing for fluorescence spectroscopic analysis. The first analysis unit 1 includes an optical system (not illustrated) including optical components such as a lens, a mirror, and a slit. The optical system is configured such that the liquid sample 61 is irradiated with the primary light from the first light source 11, the secondary light from the liquid sample 61 is incident on the first spectrometer 12, and the spectrally separated secondary light is incident on the first detection unit 13 from the first spectrometer 12.

The second analysis unit 2 includes a second light source 21, a second spectrometer 22, a second detection unit 23, and the information processing unit 4. The information processing unit 4 is shared between the first analysis unit 1 and the second analysis unit 2. The second light source 21 generates a primary light, and the liquid sample 61 in the optical cell 62 is irradiated with the primary light. The secondary light generated from the liquid sample 61 irradiated with the primary light includes Raman scattered light. The secondary light is incident on the second spectrometer 22. The second spectrometer 22 spectrally separates the secondary light, and emits the spectrally separated secondary light. The spectrally separated secondary light is incident on the second detection unit 23. The second detection unit 23 includes a photodetector, and detects incident light. The second detection unit 23 includes, for example, a photodiode, an image sensor, or a photomultiplier tube as the photodetector. The second detection unit 23 may include an amplifier.

The second detection unit 23 is connected to the information processing unit 4. The second detection unit 23 inputs the intensity of the detected light to the information processing unit 4. The information processing unit 4 performs information processing for Raman spectroscopic analysis. The second analysis unit 2 includes an optical system (not illustrated) including optical components such as a lens, a mirror, and a slit. The optical system is configured such that the liquid sample 61 is irradiated with the primary light from the second light source 21, the secondary light from the liquid sample 61 is incident on the second spectrometer 22, and the spectrally separated secondary light is incident on the second detection unit 23 from the second spectrometer 22.

The concentration measurement unit 3 includes a third light source 31, a third detection unit 32, and the information processing unit 4. The information processing unit 4 is shared among the first analysis unit 1, the second analysis unit 2, and the concentration measurement unit 3. The third light source 31 generates light, and the liquid sample 61 in the optical cell 62 is irradiated with the light. The third detection unit 32 detects transmitted light that has transmitted through the liquid sample 61 or scattered light scattered by the liquid sample 61. The third detection unit 32 includes a photodetector. The third detection unit 32 includes, for example, a photodiode, an image sensor, or a photomultiplier tube as the photodetector. The third detection unit 32 may include an amplifier.

The third detection unit 32 is connected to the information processing unit 4. The third detection unit 32 inputs the intensity of the detected light to the information processing unit 4. The information processing unit 4 performs information processing to calculate the concentrations of the first component and the second component contained in the liquid sample 61, based on the intensity of the transmitted light or the scattered light detected by the third detection unit 32. The third light source 31 emits light having a wavelength that is absorbed by the first component and a wavelength that is absorbed by the second component. For example, the third light source 31 emits monochromatic light. For example, the third light source 31 includes a monochromatic light source that emits monochromatic light absorbed by the first component, and another monochromatic light source that emits monochromatic light absorbed by the second component. For example, the third light source 31 is configured using a laser light source.

The concentration measurement unit 3 includes an optical system (not illustrated) including optical components such as a lens, a mirror, and a slit. The optical system is configured such that the liquid sample 61 is irradiated with light from the third light source 31 and transmitted light or scattered light is incident on the third detection unit 32. A mode in which the concentration measurement unit 3 includes a spectrometer, spectrally separates light from the liquid sample 61, detects the spectrally separated light, and calculates the concentrations of the first component and the second component based on the detection result of the spectrally separated light may be implemented.

A mode in which the first analysis unit 1 performs absorption spectroscopic analysis instead of fluorescence spectroscopic analysis may be implemented. For example, the first analysis unit 1 performs ultraviolet-visible spectroscopy as absorption spectroscopic analysis. A mode in which the first analysis unit 1 performs both fluorescence spectroscopic analysis and absorption spectroscopic analysis may be implemented. The first analysis unit 1 or the second analysis unit 2 may also have the function of the concentration measurement unit 3. In this case, the spectroscopic analysis device 10 does not include the concentration measurement unit 3 separately from the first analysis unit 1 or the second analysis unit 2, and the first analysis unit 1 or the second analysis unit 2 also operates as the concentration measurement unit 3. The information processing unit 4 may not be shared among the first analysis unit 1, the second analysis unit 2, and the concentration measurement unit 3; instead, each of the first analysis unit 1, the second analysis unit 2, and the concentration measurement unit 3 may have its own information processing unit. A common light source may be used as the first light source 11, the second light source 21, and the third light source 31.

The spectroscopic analysis device 10 further includes a control unit 5. The information processing unit 4 is connected to the control unit 5. In addition, each part of the first analysis unit 1, the second analysis unit 2, and the concentration measurement unit 3 is connected to the control unit 5. The control unit 5 performs control to individually operate the first analysis unit 1, the second analysis unit 2, and the concentration measurement unit 3.

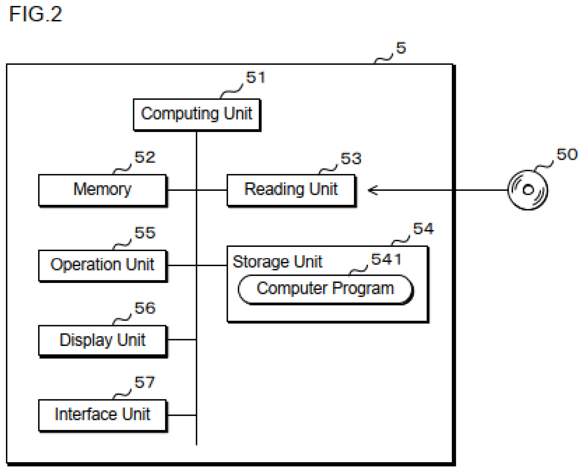

FIG. 2 is a block diagram illustrating an example of an internal functional configuration of the control unit 5. The control unit 5 is configured using a computer such as a personal computer or a server device. The control unit 5 includes a computing unit 51, a memory 52, a reading unit 53, a storage unit 54, an operation unit 55, a display unit 56, and an interface unit 57. The computing unit 51 is configured using, for example, a CPU (central processing unit), a GPU (graphics processing unit), or a multi-core CPU. The computing unit 51 may be configured using a quantum computer. The memory 52 is, for example, a RAM (random access memory). The storage unit 54 is non-volatile, and is, for example, a hard disk or a non-volatile semiconductor memory.

The reading unit 53 reads information from a recording medium 50 such as an optical disk or a portable memory. The operation unit 55 receives information such as text by receiving an operation from a user. The operation unit 55 is, for example, a keyboard, a pointing device, or a touch panel. The display unit 56 displays an image. The display unit 56 is, for example, a liquid crystal display or an EL display (electroluminescent display). The interface unit 57 is connected to the first light source 11, the second light source 21, the third light source 31, and the information processing unit 4. The control unit 5 receives data, which is input from the information processing unit 4, through the interface unit 57. In addition, the control unit 5 transmits a control signal for operating the first analysis unit 1, the second analysis unit 2, and the concentration measurement unit 3 from the interface unit 57.

The computing unit 51 causes the reading unit 53 to read a computer program 541 recorded on the recording medium 50, and causes the storage unit 54 to store the read computer program 541. The computing unit 51 executes processes necessary for the control unit 5 according to the computer program 541. The computer program 541 may be a computer program product. Incidentally, the computer program 541 may be downloaded from outside the control unit 5. Alternatively, the computer program 541 may be stored in the storage unit 54 in advance. In these cases, the control unit 5 may not include the reading unit 53.

The computer program 541 may be deployed to be executed on a single computer or on a plurality of computers disposed at one site or distributed across a plurality of sites and interconnected by a communication network. The control unit 5 may be composed of a plurality of computers. The control unit 5 may be configured using a cloud. The control unit 5 and the information processing unit 4 may be integrated.

The spectroscopic analysis device 10 performs fluorescence spectroscopic analysis or absorption spectroscopic analysis on the first component contained in the liquid sample 61, using the first analysis unit 1, and performs Raman spectroscopic analysis on the second component contained in the liquid sample 61 using the second analysis unit 2. In fluorescence spectroscopic analysis and absorption spectroscopic analysis, when the concentration of a component to be analyzed is high, it is difficult to perform analysis with high accuracy. In Raman spectroscopic analysis, when the concentration of a component to be analyzed is low, it is difficult to perform analysis with high accuracy. The spectroscopic analysis device 10 performs an analysis process to specify the concentrations of the components, which are contained in the liquid sample 61, using the first analysis unit 1 and the second analysis unit 2.

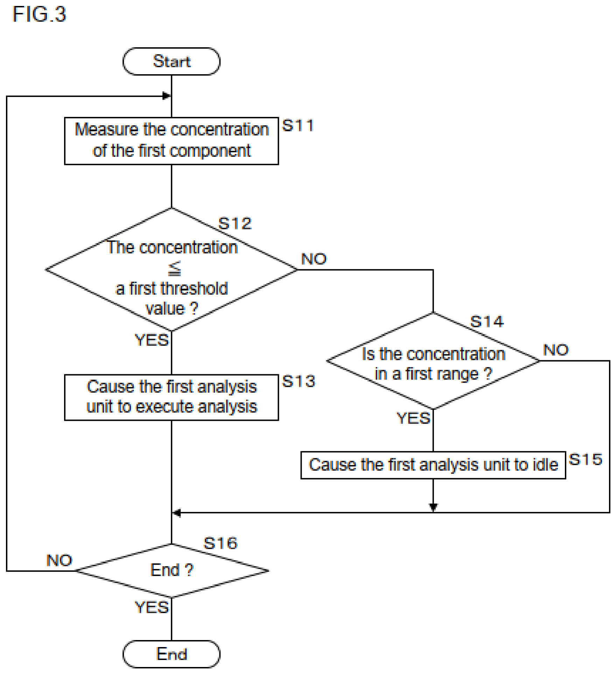

FIG. 3 is a flowchart illustrating an example of the procedure of a process for analyzing the first component that is executed by the spectroscopic analysis device 10 according to Embodiment 1. Hereinafter, the step is abbreviated as S. The computing unit 51 of the control unit 5 executes the following processes according to the computer program 541. The control unit 5 causes the concentration measurement unit 3 to measure the concentration of the first component contained in the liquid sample 61 (S11). In S11, the computing unit 51 transmits a control signal for causing the concentration measurement unit 3 to execute concentration measurement from the interface unit 57 to the concentration measurement unit 3. According to the control signal, the third light source 31 emits light, and the liquid sample 61 is irradiated with the light from the third light source 31. The third detection unit 32 detects transmitted light or scattered light, and inputs the intensity of the detected transmitted light or scattered light to the information processing unit 4. The information processing unit 4 calculates the concentration of the first component contained in the liquid sample 61, based on the intensity of the transmitted light or the scattered light that is input, and inputs the calculated concentration to the control unit 5.

The control unit 5 determines whether the concentration of the first component measured by the concentration measurement unit 3 is equal to or less than a first threshold value (S12). The first threshold value is determined in advance, and is stored in the storage unit 54. In S12, the computing unit 51 receives the concentration, which is input from the information processing unit 4, through the interface unit 57, and compares the received concentration with the first threshold value stored in the storage unit 54.

When the concentration is equal to or less than the first threshold value (S12: YES), the control unit 5 causes the first analysis unit 1 to execute analysis (S13). In S13, the computing unit 51 transmits a control signal for causing the first analysis unit 1 to execute analysis from the interface unit 57 to the first analysis unit 1. According to the control signal, the first analysis unit 1 performs fluorescence spectroscopic analysis on the first component contained in the liquid sample 61. The first light source 11 emits light, and the liquid sample 61 is irradiated with the primary light from the first light source 11. The secondary light from the liquid sample 61 is incident on the first spectrometer 12, and the first spectrometer 12 spectrally separates the secondary light. The spectrally separated secondary light is incident on the first detection unit 13. The first detection unit 13 detects the spectrally separated secondary light, and inputs the intensity of the detected secondary light to the information processing unit 4. Incidentally, the control unit 5 may perform a process of causing the first analysis unit 1 to execute analysis when the concentration of the first component is less than the first threshold value.

The information processing unit 4 performs information processing for fluorescence spectroscopic analysis based on the intensity and wavelength of fluorescence included in the secondary light. In more detail, the information processing unit 4 performs a process of specifying the concentration of the first component contained in the liquid sample 61 through fluorescence spectroscopic analysis. The information processing unit 4 stores the wavelength of fluorescence attributable to the first component in advance, specifies the intensity of the fluorescence attributable to the first component, and calculates the concentration of the first component based on the intensity of the fluorescence. For example, the information processing unit 4 stores, in advance, a calibration curve representing the relationship between the intensity and the concentration of the fluorescence attributable to the first component. The information processing unit 4 calculates the concentration of the first component by specifying a concentration corresponding to the intensity of the fluorescence based on the calibration curve.

The first component is a trace component contained in a trace amount in the liquid sample 61. For example, the concentration of the first component is 0.1 mg/mL or less. The first threshold value is determined in advance such that a concentration of the first component of 0.1 mg/mL or less can be specified by fluorescence spectroscopic analysis. In the mode in which the first analysis unit 1 performs absorption spectroscopic analysis, the information processing unit 4 performs a process of specifying the concentration of the first component contained in the liquid sample 61 through absorption spectroscopic analysis. The first analysis unit 1 specifies the concentration of the first component with higher accuracy than the concentration measurement unit 3. The information processing unit 4 stores the result of fluorescence spectroscopic analysis or absorption spectroscopic analysis.

When the concentration of the first component measured by the concentration measurement unit 3 is greater than the first threshold value (S12: NO), the control unit 5 determines whether the concentration is in a predetermined first range (S14). The first range is a range of values that are greater than the first threshold value and that are in the vicinity of the first threshold value. For example, the first range is a range that is smaller than a predetermined value greater than the first threshold value and that is greater than the first threshold value. Data indicating the first range is stored in the storage unit 54 in advance. In S14, the computing unit 51 compares the concentration with the first range.

When the concentration is in the first range (S14: YES), the control unit 5 causes the first analysis unit 1 to idle (S15). In S15, the computing unit 51 transmits a control signal for idling the first analysis unit 1 from the interface unit 57 to the first analysis unit 1. For example, the control unit 5 causes the first light source 11, the first spectrometer 12, and the first detection unit 13 to be energized. By idling the first analysis unit 1, the first analysis unit 1 is enabled to immediately execute fluorescence spectroscopic analysis or absorption spectroscopic analysis when the concentration of the first component decreases to the first threshold value or less. For this reason, fluorescence spectroscopic analysis or absorption spectroscopic analysis can be performed at an appropriate timing.

After S13 or S15 has ended or when the concentration is not in the first range in S14 (S14: NO), the control unit 5 determines whether the spectroscopic analysis is to be ended (S16). For example, the computing unit 51 measures the time that has elapsed after the start of the analysis process, in S16, determines that the spectroscopic analysis is to be ended when the elapsed time reaches a predetermined time, and determines that the spectroscopic analysis is not to be ended when the elapsed time has not yet reached the predetermined time. For example, when a user inputs an end instruction by operating the operation unit 55, the computing unit 51 determines that the spectroscopic analysis is to be ended.

When it is not determined that the spectroscopic analysis is to be ended (S16: NO), the control unit 5 returns the process to S11. In S11, the concentration measurement unit 3 measures the concentration of the first component again. The spectroscopic analysis device 10 continuously executes fluorescence spectroscopic analysis or absorption spectroscopic analysis on the liquid sample 61 by repeating S11 to S16. When it is determined that the spectroscopic analysis is to be ended (S16: YES), the control unit 5 ends the analysis process. The control unit 5 may display the result of the analysis on the display unit 56.

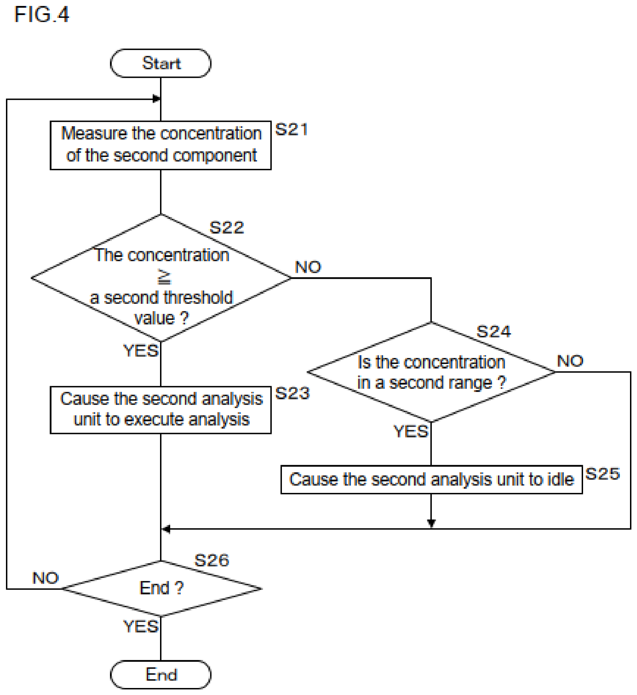

FIG. 4 is a flowchart illustrating an example of the procedure of a process for analyzing the second component that is executed by the spectroscopic analysis device 10 according to Embodiment 1. The control unit 5 causes the concentration measurement unit 3 to measure the concentration of the second component contained in the liquid sample 61 (S21). In S21, the computing unit 51 transmits a control signal for causing the concentration measurement unit 3 to execute concentration measurement from the interface unit 57 to the concentration measurement unit 3. According to the control signal, the third light source 31 emits light, the liquid sample 61 is irradiated with the light from the third light source 31, and the third detection unit 32 detects transmitted light or scattered light. The information processing unit 4 calculates the concentration of the second component contained in the liquid sample 61, based on the intensity of the transmitted light or the scattered light detected by the third detection unit 32, and inputs the calculated concentration to the control unit 5.

The control unit 5 determines whether the concentration of the second component measured by the concentration measurement unit 3 is equal to or greater than a second threshold value (S22). For example, the second threshold value is a value equal to or greater than the first threshold value. The second threshold value is determined in advance, and is stored in the storage unit 54. In S22, the computing unit 51 compares the concentration with the second threshold value stored in the storage unit 54.

When the concentration is equal to or greater than the second threshold value (S22: YES), the control unit 5 causes the second analysis unit 2 to execute analysis (S23). In S23, the computing unit 51 transmits a control signal for causing the second analysis unit 2 to execute analysis from the interface unit 57 to the second analysis unit 2. According to the control signal, the second analysis unit 2 performs Raman spectroscopic analysis on the second component contained in the liquid sample 61. The second light source 21 emits light, and the liquid sample 61 is irradiated with the primary light from the second light source 21. The secondary light from the liquid sample 61 is incident on the second spectrometer 22, and the second spectrometer 22 spectrally separates the secondary light. The spectrally separated secondary light is incident on the second detection unit 23. The second detection unit 23 detects the spectrally separated secondary light, and inputs the intensity of the detected secondary light to the information processing unit 4. Incidentally, the control unit 5 may perform a process of causing the second analysis unit 2 to execute analysis when the concentration is greater than the second threshold value.

The information processing unit 4 performs information processing for Raman spectroscopic analysis based on the intensity and Raman shift of Raman scattered light included in the secondary light. In more detail, the information processing unit 4 performs a process of specifying the concentration of the second component contained in the liquid sample 61 through Raman spectroscopic analysis. The information processing unit 4 stores the Raman shift attributable to the second component in advance, specifies the intensity of the Raman scattered light attributable to the second component, and calculates the concentration of the second component based on the intensity of the Raman scattered light. For example, the information processing unit 4 stores, in advance, a calibration curve representing the relationship between the intensity of the Raman scattered light attributable to the second component and the concentration. The information processing unit 4 calculates the concentration of the second component by specifying a concentration corresponding to the intensity of the Raman scattered light based on the calibration curve.

The second component is a component contained in the liquid sample 61 in a larger amount than the first component. For example, the concentration of the second component is 10 mg/mL or more. The second threshold value is determined in advance such that a concentration of the second component of 10 mg/mL or more can be specified by Raman spectroscopic analysis. The second analysis unit 2 specifies the concentration of the second component with higher accuracy than the concentration measurement unit 3. The information processing unit 4 stores the result of Raman spectroscopic analysis.

When the concentration of the second component measured by the concentration measurement unit 3 is less than the second threshold value (S22: NO), the control unit 5 determines whether the concentration is in a predetermined second range (S24). The second range is a range of values that are less than the second threshold value and that are in the vicinity of the second threshold value. For example, the second range is a range that is greater than a predetermined value less than the second threshold value and that is less than the second threshold value. Data indicating the second range is stored in the storage unit 54 in advance. In S24, the computing unit 51 compares the concentration of the second component with the second range.

When the concentration is in the second range (S24: YES), the control unit 5 causes the second analysis unit 2 to idle (S25). In S25, the computing unit 51 transmits a control signal for idling the second analysis unit 2 from the interface unit 57 to the second analysis unit 2. For example, the control unit 5 causes the second light source 21, the second spectrometer 22, and the second detection unit 23 to be energized. By idling the second analysis unit 2, the second analysis unit 2 is enabled to immediately execute Raman spectroscopic analysis when the concentration of the second component increases to the second threshold value or more. For this reason, Raman spectroscopic analysis can be performed at an appropriate timing.

After S23 or S25 has ended or when the concentration is not in the second range in S24 (S24: NO), the control unit 5 determines whether the spectroscopic analysis is to be ended (S26). When it is not determined that the spectroscopic analysis is to be ended (S26: NO), the control unit 5 returns the process to S21. In S21, the concentration measurement unit 3 measures the concentration of the second component again. The spectroscopic analysis device 10 continuously executes Raman spectroscopic analysis on the liquid sample 61 by repeating S21 to S26. When it is determined that the spectroscopic analysis is to be ended (S26: YES), the control unit 5 ends the analysis process. The control unit 5 may display the result of the analysis on the display unit 56.

The spectroscopic analysis device 10 executes the processes of S11 to S16 and the processes of S21 to S26 in parallel. The spectroscopic analysis device 10 executes the processes of S11 to S16 and the processes of S21 to S26 as required. In the spectroscopic analysis device 10, the first analysis unit 1 and the second analysis unit 2 can also execute analysis at the same time. When the concentration of the first component measured by the concentration measurement unit 3 is equal to or less than the first threshold value and the concentration of the second component is equal to or greater than the second threshold value, the first analysis unit 1 and the second analysis unit 2 execute the analysis at the same time. For example, the first analysis unit 1 and the second analysis unit 2 irradiate different positions of the liquid sample 61 with the primary light, or the timings that the first analysis unit 1 and the second analysis unit 2 irradiate the liquid sample 61 with the primary light are shifted from each other, and the first analysis unit 1 and the second analysis unit 2 execute analysis.

As described in detail above, in Embodiment 1, the spectroscopic analysis device 10 selects a spectroscopic analysis technique depending on the concentrations of the first component and the second component contained in the liquid sample 61. Specifically, the spectroscopic analysis device 10 performs fluorescence spectroscopic analysis or absorption spectroscopic analysis on the first component contained in the liquid sample 61 when the concentration of the first component is low, and performs Raman spectroscopic analysis on the second component contained in the liquid sample 61 when the concentration of the second component is high. Since fluorescence spectroscopic analysis or absorption spectroscopic analysis can be performed with high accuracy when the concentration of the first component is low, the first component contained in a trace amount in the liquid sample 61 can be analyzed with high accuracy. For example, the concentration of the first component can be specified with high accuracy.

In Raman spectroscopic analysis, a high concentration of a component can be analyzed. By performing Raman spectroscopic analysis when the concentration of the second component is high, the second component contained at a high concentration in the liquid sample 61 can be analyzed with high accuracy. For example, the concentration of the second component can be specified with high accuracy. In this way, the spectroscopic analysis device 10 can analyze the components in the liquid sample 61 over a wide concentration range.

### <Embodiment 2>

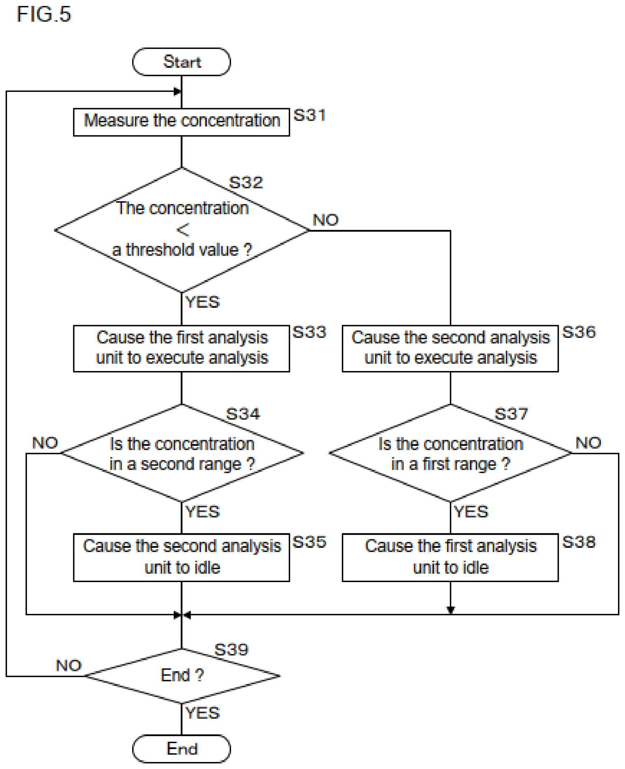

In Embodiment 2, a mode in which the first component and the second component are the same component is illustrated. In addition, in Embodiment 2, a mode in which the first threshold value and the second threshold value are the same threshold is mainly illustrated. A configuration of the spectroscopic analysis device 10 is the same as that in Embodiment 1. FIG. 5 is a flowchart illustrating an example of a procedure of an analysis process executed by the spectroscopic analysis device 10 according to Embodiment 2. The control unit 5 causes the concentration measurement unit 3 to measure the concentration of a specific component contained in the liquid sample 61 (S31). The specific component includes the first component and the second component, and is a component to be analyzed. In S31, the computing unit 51 transmits a control signal from the interface unit 57 to the concentration measurement unit 3. According to the control signal, the concentration measurement unit 3 measures a concentration. The information processing unit 4 inputs the calculated concentration to the control unit 5.

The control unit 5 determines whether the concentration of the specific component measured by the concentration measurement unit 3 is less than a threshold value (S32). The threshold value corresponds to a value where the first threshold value and the second threshold value coincide with each other. The threshold value is determined in advance, and is stored in the storage unit 54. In S32, the computing unit 51 compares the concentration input from the information processing unit 4 with the threshold value stored in the storage unit 54.

When the concentration is less than the threshold value (S32: YES), the control unit 5 causes the first analysis unit 1 to execute analysis (S33). At this time, the control unit 5 does not cause the second analysis unit 2 to execute analysis. In S33, the computing unit 51 transmits a control signal for causing the first analysis unit 1 to execute analysis from the interface unit 57 to the first analysis unit 1. According to the control signal, the first analysis unit 1 performs fluorescence spectroscopic analysis on the liquid sample 61. Incidentally, the control unit 5 may perform a process of causing the first analysis unit 1 to execute analysis when the concentration is equal to or less than the threshold value.

In S33, the information processing unit 4 performs information processing for fluorescence spectroscopic analysis. In more detail, the information processing unit 4 performs a process of specifying the concentration of the specific component contained in the liquid sample 61 through fluorescence spectroscopic analysis. The information processing unit 4 stores the wavelength of fluorescence attributable to the specific component in advance, specifies the intensity of the fluorescence attributable to the specific component, and calculates the concentration of the specific component based on the intensity of the fluorescence. In a mode in which the first analysis unit 1 performs absorption spectroscopic analysis, the information processing unit 4 performs a process of specifying the concentration of the specific component contained in the liquid sample 61 through absorption spectroscopic analysis. The information processing unit 4 stores the result of fluorescence spectroscopic analysis or absorption spectroscopic analysis.

Next, the control unit 5 determines whether the concentration of the specific component measured by the concentration measurement unit 3 is in a predetermined second range (S34). The second range is a range of values that are less than the threshold value and that are in the vicinity of the threshold value. For example, the second range is a range that is greater than a predetermined value less than the threshold value and that is less than the threshold value. Data indicating the second range is stored in the storage unit 54 in advance. In S34, the computing unit 51 compares the concentration with the second range. When the concentration is in the second range (S34: YES), the control unit 5 causes the second analysis unit 2 to idle (S35).

When the concentration of the specific component measured by the concentration measurement unit 3 is equal to or greater than the threshold value (S32: NO), the control unit 5 causes the second analysis unit 2 to execute analysis (S36). At this time, the control unit 5 does not cause the first analysis unit 1 to execute analysis. In S36, the computing unit 51 transmits a control signal for causing the second analysis unit 2 to execute analysis from the interface unit 57 to the second analysis unit 2. According to the control signal, the second analysis unit 2 performs Raman spectroscopic analysis on the liquid sample 61. Incidentally, the control unit 5 may perform a process of causing the second analysis unit 2 to execute analysis when the concentration is greater than the threshold value.

The information processing unit 4 performs information processing for Raman spectroscopic analysis based on the intensity and Raman shift of Raman scattered light included in the secondary light. In more detail, the information processing unit 4 performs a process of specifying the concentration of the specific component contained in the liquid sample 61 through Raman spectroscopic analysis. The specific component to be analyzed by the second analysis unit 2 is the same component as the specific component analyzed by the first analysis unit 1 in S33. The information processing unit 4 stores the Raman shift attributable to the specific component in advance, specifies the intensity of Raman scattered light attributable to the specific component, and calculates the concentration of the specific component based on the intensity of the Raman scattered light. The information processing unit 4 stores the result of Raman spectroscopic analysis.

Next, the control unit 5 determines whether the concentration of the specific component measured by the concentration measurement unit 3 is in a predetermined first range (S37). The first range is a range of values that are greater than the threshold value and that are in the vicinity of the threshold value. For example, the first range is a range that is smaller than a predetermined value greater than the threshold value and that is greater than the threshold value. Data indicating the first range is stored in the storage unit 54 in advance. In S37, the computing unit 51 compares the concentration with the first range. When the concentration is in the first range (S37: YES), the control unit 5 causes the first analysis unit 1 to idle (S38).

When the concentration is not in the second range in S34 (S34: NO), when S35 has ended, when the concentration is not in the first range in S37 (S37: NO), or when S38 has ended, the control unit 5 determines whether the spectroscopic analysis is to be ended (S39). When it is not determined that the spectroscopic analysis is to be ended (S39: NO), the control unit 5 returns the process to S31. In S31, the concentration measurement unit 3 measures the concentration of the specific component contained in the liquid sample 61 again. The spectroscopic analysis device 10 continuously executes fluorescence spectroscopic analysis, absorption spectroscopic analysis, or Raman spectroscopic analysis on the specific component contained in the liquid sample 61 by repeating S31 to S39. When it is determined that the spectroscopic analysis is to be ended (S39: YES), the control unit 5 ends the analysis process. The control unit 5 may display the result of the analysis on the display unit 56.

As described above, in Embodiment 2, the spectroscopic analysis device 10 performs fluorescence spectroscopic analysis or absorption spectroscopic analysis on the specific component contained in the liquid sample 61 when the concentration of the specific component is low, and performs Raman spectroscopic analysis on the specific component when the concentration of the specific component is high. One of the analysis techniques is selectively executed depending on the concentration of the component contained in the liquid sample 61. In Embodiment 2, the same component is analyzed by fluorescence spectroscopic analysis, absorption spectroscopic analysis, or Raman spectroscopic analysis. Namely, when the concentration of the specific component contained in the liquid sample 61 is low, the specific component is analyzed by fluorescence spectroscopic analysis or absorption spectroscopic analysis, and when the concentration is high, the specific component is analyzed by Raman spectroscopic analysis.

When the concentration of the specific component contained in the liquid sample 61 is low, the specific component can be analyzed with high accuracy by fluorescence spectroscopic analysis or absorption spectroscopic analysis. For example, the concentration of the specific component that is relatively low can be specified with high accuracy. When the concentration of the specific component contained in the liquid sample 61 is high, the specific component can be analyzed with high accuracy by Raman spectroscopic analysis. For example, the concentration of the specific component that is relatively high can be specified with high accuracy.

In this way, the spectroscopic analysis device 10 can analyze the specific component in the liquid sample 61 over a wide concentration range. When the concentration of the specific component contained in the liquid sample 61 to be analyzed changes as the reaction continues in the liquid sample holding unit, by analyzing the specific component over a wide concentration range, a change in the concentration of the specific component over time is acquired, and the course of the reaction becomes clear.

In the processes of S31 to S39, the threshold value where the first threshold value and the second threshold value coincide with each other is used; however, a mode in which the spectroscopic analysis device 10 analyzes the same component using the first threshold value and the second threshold value that are different from each other may be implemented. In this mode, the spectroscopic analysis device 10 analyzes the specific component through fluorescence spectroscopic analysis or absorption spectroscopic analysis when the concentration of the specific component is less than the first threshold value, and analyzes the specific component through Raman spectroscopic analysis when the concentration is greater than the second threshold value.

The spectroscopic analysis device 10 can perform calibration of the first analysis unit 1 and the second analysis unit 2. The calibration is performed using a standard sample in which the concentration of a component contained is known in advance. The standard sample is a liquid. The calibration is performed in a state where the standard sample is accommodated in the optical cell 62.

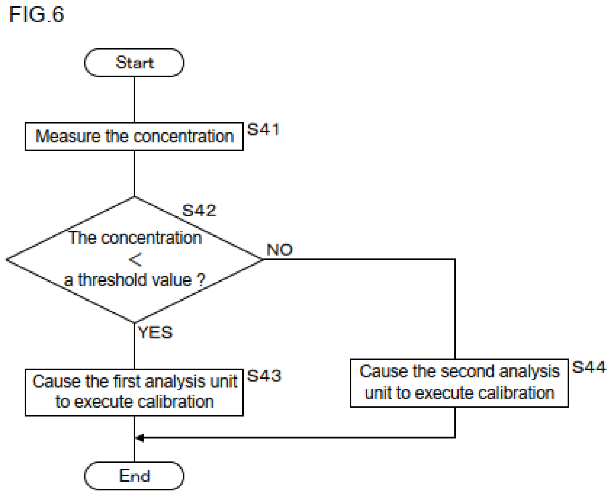

FIG. 6 is a flowchart illustrating an example of a procedure of a calibration process executed by the spectroscopic analysis device 10. The control unit 5 causes the concentration measurement unit 3 to measure the concentration of a specific component contained in the liquid sample 61 (S41). In S41, the computing unit 51 transmits a control signal for causing the concentration measurement unit 3 to execute concentration measurement from the interface unit 57 to the concentration measurement unit 3. According to the control signal, the concentration measurement unit 3 measures the concentration of the specific component contained in the standard sample. The information processing unit 4 inputs the calculated concentration to the control unit 5.

The control unit 5 determines whether the concentration is less than a threshold value (S42). When the concentration is less than the threshold value (S42: YES), the control unit 5 causes the first analysis unit 1 to execute calibration (S43). In S43, the computing unit 51 transmits a control signal for causing the first analysis unit 1 to execute analysis from the interface unit 57 to the first analysis unit 1. According to the control signal, the first analysis unit 1 performs fluorescence spectroscopic analysis on the standard sample. Incidentally, the control unit 5 may perform a process of causing the first analysis unit 1 to execute calibration when the concentration is equal to or less than the threshold value.

In S43, the information processing unit 4 performs information processing for fluorescence spectroscopic analysis. In more detail, the information processing unit 4 performs a process of specifying the concentration of the specific component contained in the standard sample through fluorescence spectroscopic analysis. The information processing unit 4 stores the wavelength of fluorescence attributable to the specific component in advance, and calculates the concentration of the specific component based on the intensity of the fluorescence. In addition, the information processing unit 4 stores the true concentration of the specific component in advance. The information processing unit 4 performs information processing for calibration by adjusting the content of the information processing for calculating the concentration such that the specified concentration approaches the true concentration as closely as possible.

In a mode in which the first analysis unit 1 performs absorption spectroscopic analysis, the information processing unit 4 specifies the concentration of the specific component contained in the standard sample through absorption spectroscopic analysis, and adjusts the content of the information processing for calculating the concentration such that the specified concentration approaches the true concentration as closely as possible. For example, the information processing unit 4 adjusts the calibration curve necessary for calculating the concentration of the component in the liquid sample through fluorescence spectroscopic analysis or absorption spectroscopic analysis, and stores the adjusted calibration curve. For example, the information processing unit 4 stores a plurality of calibration curves in advance, and sets the calibration curve, which provides the concentration closest to the true concentration, as the calibration curve used for calculating the concentration. After S43 has ended, the control unit 5 ends the process.

When the concentration measured by the concentration measurement unit 3 is equal to or greater than the threshold value (S42: NO), the control unit 5 causes the second analysis unit 2 to execute calibration (S44). In S44, the computing unit 51 transmits a control signal for causing the second analysis unit 2 to execute analysis from the interface unit 57 to the second analysis unit 2. According to the control signal, the second analysis unit 2 performs Raman spectroscopic analysis on the standard sample. Incidentally, the control unit 5 may perform a process of causing the second analysis unit 2 to execute calibration when the concentration is greater than the threshold value.

In S44, the information processing unit 4 performs information processing for Raman spectroscopic analysis. In more detail, the information processing unit 4 performs a process of specifying the concentration of the specific component contained in the standard sample through Raman spectroscopic analysis. The information processing unit 4 stores the Raman shift of fluorescence attributable to the specific component in advance, and calculates the concentration of the specific component based on the intensity of Raman scattered light. In addition, the information processing unit 4 stores the true concentration of the specific component in advance. The information processing unit 4 performs information processing for calibration by adjusting the content of the information processing for calculating the concentration such that the specified concentration approaches the true concentration as closely as possible. For example, the information processing unit 4 adjusts the calibration curve necessary for calculating the concentration of the component in the liquid sample through Raman spectroscopic analysis, and stores the adjusted calibration curve. For example, the information processing unit 4 stores a plurality of calibration curves in advance, and sets the calibration curve, which provides the concentration closest to the true concentration, as the calibration curve used for calculating the concentration. After S44 has ended, the control unit 5 ends the process.

For example, two types of standard samples with different concentrations of a specific component are used as standard samples. The spectroscopic analysis device 10 performs calibration of the first analysis unit 1 by executing the processes of S41 to S44 using the standard sample with a low concentration of the specific component. In addition, the spectroscopic analysis device 10 performs calibration of the second analysis unit 2 by executing the processes of S41 to S44 using the standard sample with a high concentration of the specific component. The processes of S41 to S44 are appropriately executed. For example, the processes of S41 to S44 are executed before the analysis of the liquid sample 61 is started or periodically.

Through the processes of S41 to S44, the spectroscopic analysis device 10 performs calibration of the first analysis unit 1 when the concentration of the specific component contained in the standard sample is low, and performs calibration of the second analysis unit 2 when the concentration is high. The calibration of the first analysis unit 1 can be performed in an appropriate state for performing fluorescence spectroscopic analysis or absorption spectroscopic analysis, and the calibration of the first analysis unit 1 can be appropriately performed. In addition, the calibration of the second analysis unit 2 can be performed in an appropriate state for performing Raman spectroscopic analysis, and the calibration of the second analysis unit 2 can be appropriately performed.

A mode in which the spectroscopic analysis device 10 performs calibration using the first threshold value and the second threshold value that are different from each other may be implemented. In this mode, the control unit 5 causes the first analysis unit 1 to execute calibration when the concentration of the specific component is less than the first threshold value, and causes the second analysis unit 2 to execute calibration when the concentration is greater than the second threshold value. In this mode as well, the spectroscopic analysis device 10 performs calibration of the first analysis unit 1 when the concentration of the specific component contained in the standard sample is low, and performs calibration of the second analysis unit 2 when the concentration is high. The calibration of the first analysis unit 1 and the second analysis unit 2 can be performed in an appropriate state.

Alternatively, the spectroscopic analysis device 10 performs calibration of the first analysis unit 1 when the concentration of the specific component contained in the standard sample is less than a third threshold value smaller than the first threshold value, and performs calibration of the second analysis unit 2 when the concentration is greater than a fourth threshold value greater than the second threshold value. The calibration of the first analysis unit 1 can be performed in a more appropriate state for performing fluorescence spectroscopic analysis or absorption spectroscopic analysis, and the calibration of the second analysis unit 2 can be performed in a more appropriate state for performing Raman spectroscopic analysis.

A mode in which the spectroscopic analysis device 10 performs calibration using a standard light source may be implemented. For example, the spectroscopic analysis device 10 performs calibration of the first analysis unit 1 and the second analysis unit 2 using a standard light source instead of the first light source 11 and the second light source 21. A mode in which the spectroscopic analysis device 10 performs calibration on the first component and the second component that are different from each other may be implemented. In this mode, the control unit 5 causes the first analysis unit 1 to execute calibration when the concentration of the first component measured by the concentration measurement unit 3 is less than the first threshold value, and causes the second analysis unit 2 to execute calibration when the concentration of the second component measured by the concentration measurement unit 3 is greater than the second threshold value.

In Embodiments 1 and 2, a mode in which the optical cell 62 is used has been illustrated; however, a mode in which the spectroscopic analysis device 10 performs analysis on a liquid sample in a state other than the liquid sample 61 in the optical cell 62 may be implemented. For example, analysis may be performed directly or indirectly on a stored liquid sample. In Embodiments 1 and 2, a mode in which a spectroscopic analysis technique is selected using the concentrations of the first component and the second component contained in the liquid sample 61 has been illustrated; however, a mode in which the spectroscopic analysis device 10 uses another index equivalent to concentration may be implemented. For example, turbidity representing the difficulty of transmission of light through the liquid sample 61 may be used as another index. Since the turbidity tends to increase or decrease in response to the increase or decrease in the concentration of the component contained in the liquid sample 61, the turbidity can be used as an index. The turbidity can be specified based on the intensity of transmitted light or the intensity of scattered light detected by the concentration measurement unit 3. A mode in which the spectroscopic analysis device 10 uses the absorbance or transmittance of the liquid sample 61 as an index may be implemented. Alternatively, a mode in which the spectroscopic analysis device 10 uses the intensity of light detected by the third detection unit 32, a signal value representing the intensity of the light, or a value obtained by electrically converting the signal value, which serves as the basis for calculating a concentration, as an index may be implemented.

The present invention is not limited to the contents of the above-described embodiments, and various modifications can be made without departing from the scope of the claims. Namely, embodiments obtained by combining technical means appropriately modified within the scope of the claims are also included in the technical scope of the present invention.

The features set forth in each embodiment can be combined with each other. In addition, the independent claims and the dependent claims set forth in the claims can be combined with each other in any and all combinations, regardless of the citation format. Furthermore, the claims use a format in which claims citing two or more other claims are set forth (multi-claim format); however, the present invention is not limited thereto. The claims may be set forth using a format in which multi-claims (multi-multi claims) citing at least one a multi-claim are set forth.

### Reference Signs List

- 10: spectroscopic analysis device
- 1: first analysis unit
- 2: second analysis unit
- 3: concentration measurement unit
- 4: information processing unit
- 5: control unit
- 51: computing unit
- 54: storage unit
- 541: computer program
- 61: liquid sample
- 62: optical cell

## Claims

1. A spectroscopic analysis device, **characterized by** comprising:
a first analysis unit that performs fluorescence spectroscopic analysis and/or absorption spectroscopic analysis on a first component contained in a liquid sample using a secondary light generated from the liquid sample irradiated with a primary light;
a second analysis unit that performs Raman spectroscopic analysis on a second component contained in the liquid sample using a secondary light generated from the liquid sample irradiated with a primary light;
a concentration measurement unit that measures concentrations of the first component and the second component contained in the liquid sample; and
a control unit,
wherein the control unit causes the first analysis unit or the second analysis unit to execute analysis depending on the concentrations measured by the concentration measurement unit.

2. The spectroscopic analysis device according to claim 1, **characterized in that**
the first component and the second component are different from each other, and
the concentration of the first component is lower than the concentration of the second component.

3. The spectroscopic analysis device according to claim 1, **characterized in that**
the first component and the second component are the same.

4. The spectroscopic analysis device according to any one of claims 1 to 3, **characterized in that**
the control unit causes the first analysis unit to execute analysis when the concentration of the first component is less than a predetermined first threshold value, and causes the second analysis unit to execute analysis when the concentration of the second component is greater than a predetermined second threshold value.

5. The spectroscopic analysis device according to claim 4, **characterized in that**
the control unit causes the first analysis unit to idle when the concentration of the first component is in a first range that is greater than the first threshold value and that is in the vicinity of the first threshold value, and causes the second analysis unit to idle when the concentration of the second component is in a second range that is less than the second threshold value and that is in the vicinity of the second threshold value.

6. The spectroscopic analysis device according to claim 4 or 5, **characterized in that**
the control unit causes the first analysis unit to execute calibration when the concentration of the first component is less than the first threshold value, and causes the second analysis unit to execute calibration when the concentration of the second component is greater than the second threshold value.

7. The spectroscopic analysis device according to any one of claims 4 to 6, **characterized in that**
the first threshold value and the second threshold value are the same threshold value.

8. A spectroscopic analysis method, **characterized by** comprising:
measuring concentrations of a first component and a second component contained in a liquid sample;
performing fluorescence spectroscopic analysis and/or absorption spectroscopic analysis using a secondary light generated from the liquid sample irradiated with a primary light, when the concentration of the first component is low; and
performing Raman spectroscopic analysis using a secondary light generated from the liquid sample irradiated with a primary light, when the concentration of the second component is high.
